# EUROPEAN PATENT APPLICATION

(11) **EP 2 461 454 A2**
(43) Date of publication of application: **06.06.2012**
(21) Application number: 11188753.5
(22) Date of filing: 11.11.2011
(51) Int. Cl.: H02J 3/18

(54) **Integration of renewable power generating technologies with integrated volt/var control systems**

(30) Priority: 30.11.2010 US 956124
(71) Applicant: General Electric Company, Schenectady, NY 12345 (US)
(72) Inventor: O'Brien, Kathleen Ann, Niskayuna, NY New York 12309 (US); Ren, Wei, Niskayuna, NY New York 12309 (US)
(74) Representative: Bedford, Grant Richard

(57) **Abstract**

A distribution management system (DMS) (12) includes an integrated volt/var controller (IVVC) (14) that is configured to control operation of at least one corresponding renewable energy source (56), (58) or energy storage device (60), (62), (64) power converter in response to IVVC commands generated via algorithmic optimization software integrated within the IVVC (14). At least one renewable energy source (56), (58) or energy storage device (60), (62), (64) is controlled to operate alone or in coordination with one or more discrete step size reactive power (VAR) compensation devices (22) to generate continuously varying reactive power required by a corresponding power distribution system (50).

## Description

The invention relates generally to integrated volt/var control systems, and more particularly to a system and method of integrating renewable power generating technologies with integrated volt/var control systems.

Large inductive loads such as air conditioners, furnaces, dryers, and the like can consume reactive power (VARs) in addition to real power (Watts). Transferring reactive power over transmission lines and distribution feeders involves I²R losses that have to be supplied by utilities. Since residential power meters only measure Watts that are used to determine customer billing requirements, utilities want to minimize the number of VARs consumed. This result is generally achieved by switching in capacitor banks to compensate for VAR losses locally in distribution systems.

Besides capacitor banks to provide VAR compensation, distribution systems are also equipped with voltage regulation devices (e.g., On Load Tap Changer ― OLTC, or voltage regulator - VR) to further increase the controllability of feeder voltages. A number of different grid standards require utilities to provide their feeder terminal voltages, seen by end users, within a narrow range around the nominal value. Traditionally, the control of these mentioned Volt/VAR devices is implemented locally and individually at each device. In recent years, an advanced control system is employed to coordinate between OLTC, VR, and capacitor bank control to achieve multiple customizable objective functions such as minimization of feeder loss, maximization of power factor at substation, minimization of total power demand during peak time, flattening voltage profile, and etc. This so-called integrated volt/var control (IVVC) employs advanced algorithms (e.g., global optimization algorithm, distribution load flow, distribution state estimation, distribution load forecasting) within a Distribution Management System (DMS) to accomplish this task.

Bulk sized capacitor banks are switched either fully in or fully out according to IVVC command. Even for those multi-step capacitor banks, no matter how many steps they may have, the reactive power switched in or out will be in discrete set amounts that generally cannot be changed. In contrast, solar and wind inverters have the ability to freely control their reactive power output.

In view of the foregoing, it would be advantageous to integrate freely controllable reactive power capabilities of renewable power generators including without limitation solar, wind, fuel cell, storage battery, and the like, with IVVC optimization algorithm(s) to provide an enhanced distribution management system.

Briefly, in accordance with one embodiment of the present invention, a power distribution system comprises: at least one renewable energy source or storage device; and a distribution management system (DMS) comprising an integrated volt/var controller (IVVC), wherein the DMS is configured to control operation of at least one corresponding renewable energy source or storage device power converter in response to IVVC commands such that at least one renewable energy source or storage device operates alone or in coordination with one or more discrete step size reactive power (VAR) compensation devices to generate continuously varying reactive power.

A power distribution system according to another embodiment comprises: at least one renewable energy source or storage device configured in combination with one or more power converters to generate continuously varying amounts of reactive power; at least one reactive power (VAR) compensation device configured to provide predetermined incremental amounts of reactive power; an integrated volt/var controller (IVVC) comprising optimization algorithmic software; and a distribution management system (DMS) configured to control operation of the one or more renewable energy source or storage device power converters and the at least one VAR compensation device in response to the IVVC optimization algorithmic software such that at least one renewable energy source or storage device operates alone or in combination with at least one VAR compensation device to generate continuously varying reactive power required by the power distribution system.

According to yet another embodiment, a method of operating a power distribution system comprises: providing at least one renewable energy source or energy storage device configured in combination with one or more power converters to generate continuously varying amounts of reactive power; providing at least one reactive power (VAR) compensation device configured to provide predetermined incremental amounts of reactive power; providing an integrated volt/var controller (IVVC) responsive to optimization algorithmic software; providing a distribution management system (DMS); and controlling operation of at least one corresponding renewable energy source or energy storage device power converter in response to IVVC commands determined via the optimization algorithmic software such that at least one renewable energy source or energy storage device operates to vary reactive power supplied to the power distribution system only when the one or more VAR compensation devices are capable of providing only less than or more than the reactive power required by the power distribution system.

Various features, aspects, and advantages of the present invention will become better understood when the following detailed description is read with reference to the accompanying drawings in which like characters represent like parts throughout the drawings, wherein:
Figure 1 illustrates a conventional integrated volt/var control (IVVC) system that is known in the prior art; and
Figure 2 illustrates an IVVC system according to one embodiment of the invention.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

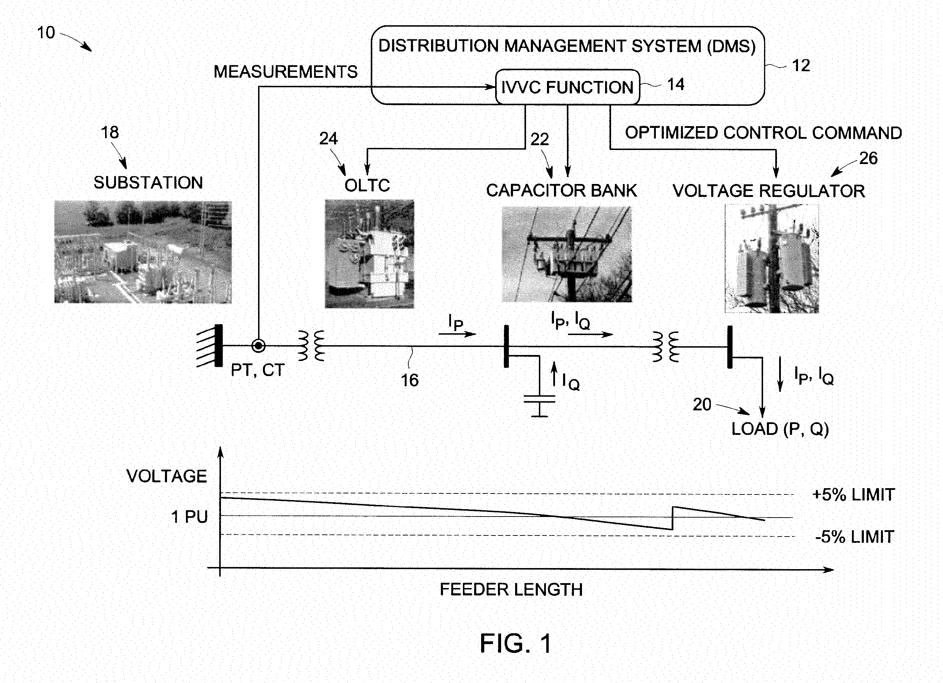

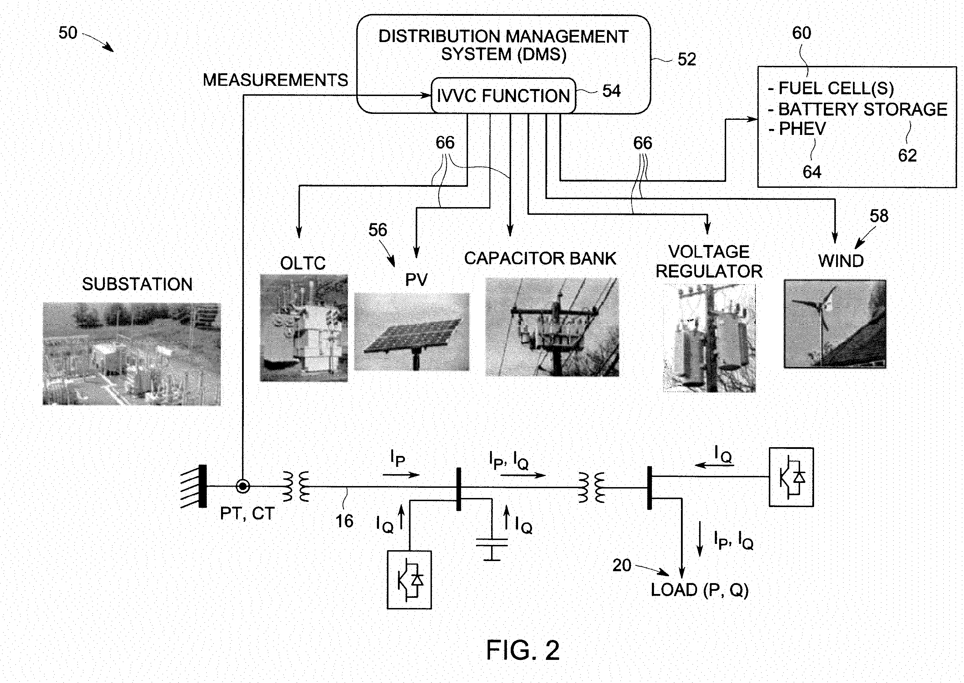

Figure 1 illustrates a power distribution system 10 comprising a conventional distribution management system (DMS) 12. The DMS 12 operates in response to an integrated volt/var control (IVVC) system 14 comprising an algorithmic optimization software. Fundamentals of VAR compensation and voltage regulation are first described herein with reference to Figure 1 to provide a better understanding of the embodiments described herein with reference to Figure 2.

When a user load consumes reactive power (Q) as well as real power (P) in a distribution system, current has to flow over a feeder 16 in order to transfer real power and reactive power from a substation 18 to the user end, or load (20) if there is no reactive power compensation in between the substation 18 and the user end or load (20). Although reactive power does not represent real energy consumption (in fact, it is the energy bouncing between reactive and capacitive devices), it does increase the magnitude of that current flow. From the aspect of a power distribution system, this increased current flow causes both increased transfer losses and higher voltage drops on feeders.

The need to supply reactive current to individual distribution substations then lowers the overall transferring capability of real power on transmission lines. It is for these reasons that reactive power (VAR) compensation devices (i.e., capacitor banks) 22 are frequently used in distribution systems to locally provide reactive power.

Distribution systems are also equipped with voltage regulation devices i.e., OLTC - on-load tap changers 24, or voltage (Volt) regulators 26, to more accurately control the voltage profile along feeders. In this way, end users will always have incoming voltage levels within a specified range, e.g., Ipu +/- 5%.

VAR compensation and Volt regulation devices, until recently, were controlled based on local measurements. Such localized control techniques can disadvantageously result in fighting over master/slave control resulting in unnecessary on/off switching and reduced overall system performance. Coordinating the operation of all VAR compensation and Volt regulation devices from a central controller (DMS) 12 such as depicted in Figure 1 that may reside at the corresponding substation 18 or a DMS control room provides a global optimal solution to achieve minimization of transfer losses, flattening of voltage profiles, minimization of total power consumption, and the like.

The present inventors recognized that with the emergence of distributed renewable energy generation/storage devices (e.g., PV, wind, battery storage, plug-in hybrid electric vehicle (PHEV)), interfacing a power grid via front-end power electronics renders a variety of possibilities for utilizing these free sources of reactive power to partially, or even totally, replace the traditional VAR compensation devices (i.e., capacitor banks 22). Unlike capacitor banks that can only provide bulk reactive power with discrete step sizes, front-end power electronics based devices can generate continuously varying reactive power, thus allowing for even more accurate VAR compensation. This technique further allows for changing power without requiring any hard switching, thus eliminating undesirable switching transients.

Looking now at Figure 2, a power distribution system 50 is illustrated according to one embodiment of the invention. Power distribution system 50 comprises an advanced DMS system 52 that operates in response to instructions provided via IVVC system 54 algorithmic software that together are configured to control VAR losses and maintain voltage levels using techniques such as described herein.

Power distribution system 50 can be seen to comprise photovoltaic (PV) energy sources 56 and wind energy sources 58. Although other renewable energy sources including without limitation, fuel cells 60, battery storage 62, and plug-in hybrid electric vehicles (PHEVs) 64, can also be employed using the principles described herein, the power distribution system 50 is described with reference primarily to solar and wind energy sources to enhance clarity. Since solar and wind inverters have the ability to freely control their reactive output power, as stated herein, this feature can be employed via an optimization algorithm that generates IVVC system 54 commands 66 to add additional degrees of freedom for DMS system 52 VAR control. In this way, the freely controllable reactive power capabilities of corresponding solar/wind/fuel cell etc. inverters further enhance the capabilities of the IVVC system 54 optimization algorithmic software and corresponding DMS system 52.

Enhancing the IVVC system 54 optimization algorithmic software to utilize the freely controllable reactive power capabilities of renewable energy generation/storage devices i.e., solar/wind/fuel cell/battery etc. inverters, advantageously provides an additional green function for the IVVC system 54 without requiring added hardware costs to any part of the power distribution system 50. In summary explanation, a distribution management system (DMS) 52 comprising integrated volt/var control (IVVC) system 54 software is configured to control operation of at least one corresponding renewable energy source or storage device power converter in response to the IVVC system 54 software such that at least one renewable energy source or storage device 56, 58, 60, 62, 64 operates alone or in coordination with one or more discrete step size reactive power (VAR) compensation devices 22 to generate continuously varying reactive power. This continuously varying reactive power can be transmitted to a corresponding power grid or feeder line 16 to provide the local reactive power required by an end user or load 20.

In further summary explanation, the embodiments described herein incorporate not only traditional volt/var devices, e.g., voltage regulators, capacitor banks, but also renewable energy sources, e.g., wind/PV converters. The embodiments described herein apply system level control strategies to a power distribution system to regulate power flow on a network to achieve desired optimal objectives. Although reactive power control techniques have been applied to individual wind turbine controls at a lower lever, such known control techniques generally receive a set point command from the IVVC, and then operate the wind turbine to meet that request.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A power distribution system comprising:
   at least one renewable energy source or energy storage device; and
   a distribution management system (DMS) comprising an integrated volt/var controller (IVVC), wherein the DMS is configured to control operation of at least one corresponding renewable energy source or storage device power converter in response to IVVC commands such that at least one renewable energy source or storage device operates alone or in coordination with one or more discrete step size reactive power (VAR) compensation devices to generate continuously varying reactive power required by the power distribution system.
2. The power distribution system according to clause 1, wherein the at least one renewable energy source is selected from a wind energy source, a solar energy source, a fuel cell, an energy storage battery, and a plug-in hybrid electric vehicle.
3. The power distribution system according to any preceding clause, further comprising an optimization algorithmic software integrated with the IVVC, wherein the IVVC is configured to generate the IVVC commands in response to the optimization algorithmic software.
4. The power distribution system according to any preceding clause, wherein the one or more discrete step size reactive power (VAR) compensation devices comprise at least one capacitor bank.
5. The power distribution system according to any preceding clause, further comprising one or more voltage regulation devices, wherein the DMS is further configured to control operation of at least one voltage regulation device in response to the IVVC commands such that voltage levels associated with a corresponding electric feeder line remain within prescribed limits during the continuously varying reactive power.
6. The power distribution system according to any preceding clause, wherein the DMS is further configured to control operation at least one corresponding renewable energy source or storage device power converter in response to the IVVC commands such that at least one renewable energy source or storage device operates to vary reactive power required by the power distribution system only when the one or more VAR compensation devices are capable of providing only less than or more than the reactive power required by the power distribution system.
7. A power distribution system comprising:
   at least one renewable energy source or energy storage device configured in combination with one or more power converters to generate continuously varying amounts of reactive power;
   at least one reactive power (VAR) compensation device configured to provide predetermined incremental amounts of reactive power;
   an integrated volt/var controller (IVVC) comprising optimization algorithmic software; and
   a distribution management system (DMS) configured to control operation of the one or more renewable energy source or storage device power converters and the at least one VAR compensation device in response to IVVC commands determined via the optimization algorithmic software such that at least one renewable energy source or storage device operates alone or in combination with at least one VAR compensation device to generate continuously varying reactive power required by the power distribution system.
8. The power distribution system according to any preceding clause, wherein the at least one renewable energy source or energy storage device is selected from a wind energy source, a solar energy source, a fuel cell, an energy storage battery, and a plug-in hybrid electric vehicle.
9. The power distribution system according to any preceding clause, wherein the at least one VAR compensation device comprises at least one capacitor bank.
10. The power distribution system according to any preceding clause, further comprising one or more voltage regulation devices, wherein the DMS is further configured to control operation of at least one voltage regulation device in response to the IVVC commands such that voltage levels associated with a corresponding electric feeder line remain within prescribed limits during the continuously varying reactive power.
11. The power distribution system according to any preceding clause, wherein the DMS is further configured to control operation of at least one corresponding renewable energy source or storage device power converter in response to the IVVC commands such that at least one renewable energy source or storage device operates to vary reactive power required by the power distribution system only when the one or more VAR compensation devices are capable of providing only less than or more than the reactive power required by the power distribution system.
12. A method of operating a power distribution system, the method comprising:
   providing at least one renewable energy source or energy storage device configured in combination with one or more power converters to generate continuously varying amounts of reactive power;
   providing at least one reactive power (VAR) compensation device configured to provide predetermined incremental amounts of reactive power;
   providing an integrated volt/var controller (IVVC) responsive to optimization algorithmic software;
   providing a distribution management system (DMS); and
   controlling operation of at least one corresponding renewable energy source or energy storage device power converter in response to IVVC commands determined via the optimization algorithmic software such that at least one renewable energy source or energy storage device operates to vary reactive power supplied to the power distribution system only when the one or more VAR compensation devices are capable of providing only less than or more than the reactive power required by the power distribution system.
13. The method according to any preceding clause, wherein providing at least one renewable energy source or energy storage device comprises providing at least one renewable energy source or energy storage devices selected from a wind energy source, a solar energy source, a fuel cell, an energy storage battery, and a plug-in hybrid electric vehicle.
14. The method according to any preceding clause, wherein providing at least one reactive power (VAR) compensation device comprises providing at least one capacitor bank.
15. The method according to any preceding clause, wherein providing an integrated volt/var controller (IVVC) comprises providing an IVVC configured to continuously analyze and control load tap changers (LTCs), capacitor banks, voltage regulators and one or more renewable energy sources or energy storage devices to manage power distribution system power factor and voltage.
16. The method according to any preceding clause, wherein the optimization algorithmic software is configured to command the IVVC to continuously analyze and control load tap changers (LTCs), capacitor banks, voltage regulators and one or more renewable energy sources or energy storage devices to manage power distribution system power factor and voltage.

## Claims

1. A power distribution system (50) comprising:
at least one renewable energy source (56, 58) or energy storage device (60, 62, 64); and
a distribution management system (DMS) (52) comprising an integrated volt/var controller (IVVC) (54), wherein the DMS (54) is configured to control operation of at least one corresponding renewable energy source (56, 58) or storage device (60, 62, 64) power converter in response to IVVC commands such that at least one renewable energy source (56, 58) or storage device (60, 62, 64) operates alone or in coordination with one or more discrete step size reactive power (VAR) compensation devices (22, 24, 26) to generate continuously varying reactive power required by the power distribution system (50).

2. The power distribution system (50) according to claim 1, wherein the at least one renewable energy source is selected from a wind energy source (58), a solar energy source (56), a fuel cell (60), an energy storage battery (62), and a plug-in hybrid electric vehicle (64).

3. The power distribution system (50) according to any preceding claim, further comprising an optimization algorithmic software integrated with the IVVC (54), wherein the IVVC (54) is configured to generate the IVVC commands in response to the optimization algorithmic software.

4. The power distribution system (50) according to any preceding claim, wherein the one or more discrete step size reactive power (VAR) compensation devices comprise at least one capacitor bank (22).

5. The power distribution system (50) according to any preceding claim, further comprising one or more voltage regulation devices (26), wherein the DMS (50) is further configured to control operation of at least one voltage regulation device (26) in response to the IVVC commands such that voltage levels associated with a corresponding electric feeder line remain within prescribed limits during the continuously varying reactive power.

6. The power distribution system (50) according to any preceding claim, wherein the DMS (52) is further configured to control operation at least one corresponding renewable energy source (56, 58) or storage device (60, 62, 64) power converter in response to the IVVC commands such that at least one renewable energy source (56, 58) or storage device (60, 62, 64) operates to vary reactive power required by the power distribution system (50) only when the one or more VAR compensation devices are (22) capable of providing only less than or more than the reactive power required by the power distribution system (50).

7. A power distribution system (50) comprising:
at least one renewable energy source (56, 58) or energy storage device (60, 62, 64) configured in combination with one or more power converters to generate continuously varying amounts of reactive power;
at least one reactive power (VAR) compensation device (22, 24) configured to provide predetermined incremental amounts of reactive power;
an integrated volt/var controller (IVVC) (54) comprising optimization algorithmic software; and
a distribution management system (DMS) (52) configured to control operation of the one or more renewable energy source or storage device power converters and the at least one VAR compensation device (22, 24) in response to IVVC commands determined via the optimization algorithmic software such that at least one renewable energy source (56, 58) or storage device (60, 62, 64) operates alone or in combination with at least one VAR compensation device (22, 24) to generate continuously varying reactive power required by the power distribution system (50).

8. The power distribution system (50) according to claim 7, wherein the at least one VAR compensation device comprises at least one capacitor bank (22).

9. The power distribution system (50) according to claim 7 or claim 8, further comprising one or more voltage regulation devices (26), wherein the DMS (52) is further configured to control operation of at least one voltage regulation device (26) in response to the IVVC commands such that voltage levels associated with a corresponding electric feeder line remain within prescribed limits during the continuously varying reactive power.

10. The power distribution system (50) according to any of claims 7 to 9, wherein the DMS (52) is further configured to control operation of at least one corresponding renewable energy source (56, 58) or storage device (60, 62, 64) power converter in response to the IVVC commands such that at least one renewable energy source (56, 58) or storage device (60, 62, 64) operates to vary reactive power required by the power distribution system (50) only when the one or more VAR compensation devices (22, 24) are capable of providing only less than or more than the reactive power required by the power distribution system (50).
